# EUROPEAN PATENT APPLICATION

(11) **EP 1 940 078 A1**
(43) Date of publication of application: **02.07.2008**
(21) Application number: 06804929.5
(22) Date of filing: 16.10.2006
(51) Int. Cl.: H04L 12/26

(54) **METHOD AND SYSTEM FOR CONTROLLING THE CONTINUITY CHECK OF THE ETHERNAT LINKS AND THE MAINTENANCE TERMINAL THEREOF**

(30) Priority: 17.10.2005 CN 200510109064
(71) Applicant: Huawei Technologies Co., Ltd., Longgang District Shenzhen Guangdong 518129 (CN)
(72) Inventor: YAN, Zhiyong, Guangdong 518129 (CN)
(74) Representative: Körber, Martin Hans
(86) International application number: PCT/CN2006/002705
(87) International publication number: WO 2007/045156

(57) **Abstract**

A method, system and maintenance point is provided to control the continuity check for the Ethernet links. The method includes: starting to send a continuity check message carrying exit check information to a sink end maintenance point of the link when a source end maintenance point of the link receives a deactivation indication of the continuity check; returning an exit response message to the source end maintenance point and stopping the continuity check when the sink end maintenance point receives the continuity check message carrying the exit check information; stopping sending the continuity check message carrying the exit check information and exiting the continuity check when the source end maintenance point receives the exit response message. The method solves the problem that the continuity check loss alert can not be eliminated in time even if the network failure has been eliminated if the deactivation indication is sent during the network failure in the existing procedure of continuity check.

## Description

### Field of the Invention

The invention relates to the field of Ethernet, and in particular, to a technology for checking and maintaining the Ethernet, and discloses a method, system and maintenance point for controlling continuity check of Ethernet link.

### Background of the Invention

Currently, the Continuity Check (CC) is normally adapted to automatically discover network failure in the mechanism of end-to-end Operations, Administration and Maintenance (OAM) for the Ethernet. The Institute of Electrical and Electronics Engineers (ITU-T) and the International Telecommunication Union (IEEE) both research it.

The failure of the Ethernet may be caused by link failure or configuration mistakes of loop and software. The mechanism of continuity check provides a method by which not only the failure of hardware may be checked, but also the failure of software, such as memory exhausting and the configuration mistakes, may be checked. The mechanism of the continuity check means that a receiver may perform failure judgment according as whether an expected Continuity Check Message (CCM) is received or not when the continuity check message is periodically sent unilaterally or bilaterally between two network elements which execute the check. If a failure happens, a continuity check loss alert is performed so as to activate the mechanism of failure conforming, failure locating, failure isolating and failure repairing in time.

A Service Instance (SI) in the Ethernet may pass through multiple network elements. In order to ensure the continuity of a SI link, the link carrying the SI needs to be performed continuity check. Normally, the multiple network elements of the SI are set as a Maintenance Entity Group (MEG). A series of Maintenance Points (MPs) between two marginal network elements in the MEG constitutes a Maintenance Entity (ME). Therefore, one ME includes two or more MPs; one MEG consists of one or more MEs. The network side configures an ME Group Identifier (MEG ID) inclusive of all over the world for every MEG.. The MEG ID is carried in the CCM and is adapted to identify the check message of its own group. The MP at the edge of links is called Maintenance End Point (MEP). The MP at the middle of links is called Maintenance Intermediate Point (MIP). The end-to-end continuity check is executed by two MEP at the edge of links. The MEP sending the CCM is called source end MEP, and the MEP receiving the CCM and performing the failure judgment is called sink end MEP.

The destination address of CCM is a multicast MAC address by special definition. The CCM includes an MEG ID and the Maintenance End Point Identifier (MEP ID) of the MEP at the present end. The CCM is transparently transmitted by the MIP. The sink end MEP performs the continuity check according as whether the expected CCM is received, failure judgment and alert. The detailed process includes the following steps.

Step 1. Activate the continuity check

When the continuity check is needed, a maintainer sends an activation indication for executing continuity check to the source end MEP. After receiving the activation indication for executing continuity check, the source end MEP immediately starts to send the CCM periodically. After receiving the first CCM, the sink end MEP starts to activate the continuity check.

Step 2. Execute the continuity check

After activating the continuity check, the source end MEP starts to send the CCM periodically. The sending period of the CCM is configured by the maintainer or is a default value. The sending period of the CCM is normally in a range from 0.01s to 665.35s. The source end MEP monitors the sending period by activating a corresponding timer.

The sink end MEP receives the CCM. The CCM includes the MEG ID. The sink end MEP judges whether the CCM is sent by the MEP in the present check group or not according to the MEG ID. If the CCM is sent by the MEP in the present check group, the CCM is processed. If the CCM is not sent by the MEP in the present check group, the CCM is discarded or transparently transmitted.

In the process of the continuity check, the CCM may be discarded for many factors. In order to increase the accuracy of the continuity check loss alert, it is allowed that the sink end MEP may make an alert only after two or three CCMs are lost. Therefore, the CMM also includes the valid life time value of the message, i.e. Type, Length, Value (TLV). The life time value may be configured to be 2.5 to 3.5 times of the sending period of CCM. When the sink end MEP receives a CCM every time, it activates a timer to monitor whether the corresponding life time carried in the message is timeout or not. If a next CCM is received before timeout, monitoring is restarted. If the next CCM has not been received when the life time is timeout, an alert is made. After the failure is eliminated and the sink end MEP receives the CCM sent by the source end MEP in the maintenance entity group again, the alert is eliminated.

Every MP needs to check whether the MEG ID in the CCM matches its own configuration and the sink end MEP also needs to confirm that the MEP ID in the received CCM is not the same as its own MEP ID.

Step 3. Deactivate the continuity check

After receiving a deactivation indication sent by the maintainer to stop the continuity check, the source end MEP sends the last CCM to the sink end MEP. The life time value of the message is set to be 0 to indicate check exit.

After receiving the CCM whose life time value is 0, the sink end MEP stops the continuity check including discarding the CCM immediately and stopping the timer which monitors whether the life time is timeout or not.

In a word, during the end-to-end continuity check, when the sink end MEP receives a CCM every time, the sink end MEP may activate a timer of CCM validity. The time of the timer is configured according to the TLV (Type Length Value) of the life time carried in the CCM. If the validity timer is time out but the sink end MEP still does not receive the next CCM, the link is considered that a failure happens and the continuity check loss alert is performed.

The function of the continuity check mechanism in the OAM of Ethernet is to discover the network failure automatically. In the check process mentioned above, if the continuity check mechanism is activated and there is a network failure (fiber broking or configuration mistakes, etc.), the sink end MEP reports a continuity check loss alert to the maintainer. If the maintainer issues a deactivation indication before the failure is eliminated, the last CCM whose life time is configured to be 0 sent by the source end may not reach the sink end MEP. At this time, the source end MEP has stopped sending the CCM but the sink end MEP can not stop the alert. Although the network failure is recovered, the continuity check loss alert of the sink end sill can not be eliminated and therefore results in a wrong alert.

### Summary of the Invention

Embodiments of the invention provide a method, system and maintenance point for controlling the continuity check of an Ethernet link to solve the problem that the continuity check loss alert can not be eliminated in time even if the network failure has been eliminated if the deactivation indication is sent during the network failure in the existing procedure of continuity check.

An embodiment of the present invention provides a method for controlling the continuity check of an Ethernet links, including:

starting to send a continuity check message carrying exit check information to a sink end maintenance point of the link when a source end maintenance point of the link receives a deactivation indication of the continuity check;

returning an exit response message to the source end maintenance point and stopping the continuity check when the sink end maintenance point receives the continuity check message carrying the exit check information;

stopping sending the continuity check message carrying the exit check information and exiting the continuity check when the source end maintenance point receives the exit response message.

An embodiment of the present invention also provides a system for controlling the continuity check of the Ethernet link, including a first maintenance point and a second maintain point respectively located at two ends of an Ethernet link.

The first maintenance point includes:

a user indication receipt module adapted to output a corresponding trigger signal after receiving a deactivation indication for stopping the continuity check; and

a first maintenance module adapted to start to send a continuity check message carrying exit check information according to the trigger signal;

The second maintenance point includes: a second maintenance module adapted to return an exit response message to the first maintenance point and stop the continuity check after receiving the continuity check message carrying the exit check information.

The first maintenance module stops sending the continuity check message carrying the exit check information when the first maintenance module receives the exit response message and exits the continuity check.

An embodiment of the present invention also provides a first MP and a second MP mentioned above.

The embodiments of the present invention include following beneficial effects.

The technical solution in the embodiments of the present invention introduces a response mechanism of the deactivation indication in the deactivation steps of the mechanism of the continuity check. In the response mechanism, the source end MEP starts to send the exit continuity check message when it receives the deactivation indication. And the source end MEP doesn't stop sending the exit continuity check message until it receives the response message from the sink end MEP. Therefore, even if the deactivation indication is sent when the link fails, it may be ensured that the sink end MEP may receive the indication for exiting the check sent from the source end MEP after the failure is eliminated. The continuity check failure alert may be stopped timely. The wrong alert of continuity check failure caused by network failure is eliminated. The accuracy of the alert is increased.

### Brief Description of the Drawings

Figure 1 is a flowchart illustrating the activation of the continuity check mechanism in the prior art;

Figure 2 is a flowchart illustrating the continuity check in the prior art;

Figure 3 is a flowchart illustrating the deactivation of the continuity check in accordance with the embodiments of the present invention;

Figure 4 is a schematic diagram illustrating the format of the CCM in the prior art;

Figure 5 is a schematic diagram illustrating the format of the CCR message in accordance with the embodiments of the present invention; and

Figure 6 is a schematic diagram illustrating the main structure of a system to control the continuity check for the Ethernet links in accordance with the embodiments of the present invention.

### Detailed Description of the Embodiments

In the embodiments of the present invention, after receiving the deactivation indication sent by the maintainer, the source end MEP starts to send the CCM whose life time TLV is configured to be 0 to the sink end MEP. The CCM may be sent periodically. After receiving the CCM whose life time TLV is 0, the sink end MEP sends a Continuity Check Reply (CCR) response message to the source end MEP. The source end MEP does not stop sending the CCM whose life time TLV is 0 and perform the follow-up process until the source end MEP receives the CCR message sent by the sink end MEP. When the failed link is recovered, the sink end MEP may avoid the wrong alert caused by not receiving the CCM whose TLV is 0.

The source end MP may also intermittently send the CCM carrying exit check information according to the following manners:

according to the preset time interval sequence, intermittently sending the CCM carrying exit check information;

according to the time interval generated randomly, intermittently sending the CCM carrying exit check information every time.

Embodiments of the present invention are described in detail in conjunction with accompanying drawings as follows. For example, the CCM carrying exit check information is periodically sent. The method to control the continuity check for the Ethernet links in accordance with the embodiments of the present invention includes the following three steps.

Step1. Activate the continuity check

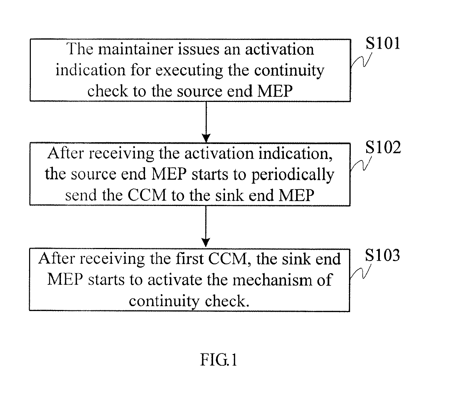

As shown in Figure 1, the flow of activating the continuity check includes the following steps.

S101. The maintainer issues an activation indication for executing the continuity check to the source end MEP;

The maintainer configures a maintenance entity group in advance, and configures the following information on every MP of the maintenance entity group: an MEG ID of the maintenance entity group, a life time of an initial message, period of sending the message and the MEP ID (or MIP ID) at the present end, etc. The life time of message may be adjusted in the check process if necessary. And the network side is also configured with a default life time. The maintainer issues an activation indication of continuity check to the source end MEP when the continuity check needs to be performed.

S102. After receiving the activation indication, the source end MEP starts to periodically send the CCM to the sink end MEP;

After receiving the activation indication for executing the continuity check, the source end MEP immediately starts to periodically send the CCM. The CCM includes the MEG ID of maintenance entity group, the MEP ID and the life time of message at the present end.

S103. After receiving the first CCM, the sink end MEP starts to activate the mechanism of continuity check.

Step 2. Execute the continuity check

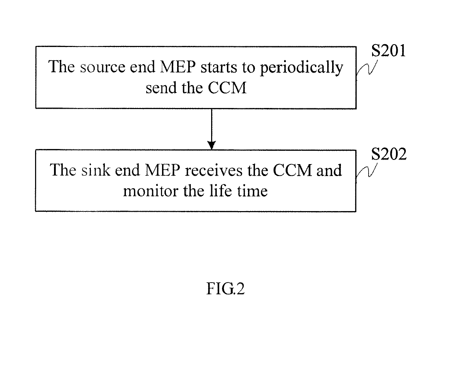

As shown in Figure 2, the check flow specifically includes the following steps:

S201. After the mechanism of continuity check is activated, the source end MEP starts to periodically send the CCM. The period of sending the CCM is configured by the maintainer or is a default value in a range from 0.01s to 665.35s. The source end MEP monitors the sending period by activating the corresponding timer.

S202. The sink end MEP receives the CCM which includes the MEG ID. The sink end MEP judges whether the CCM is sent by the source end MEP of the present detect group or not according to the MEG ID. If the CCM is sent by the source end MEP of the present detect group, the CCM is processed. If the CCM is not sent by the source end MEP of the present detect group, the CCM is discarded or transparently transmitted.

To increase the reliability of the continuity check loss alert, it is allowed that the sink end MEP may make the alert only after two, three or four CCM are continuously lost. Therefore, the CMM also includes valid life time value of the message. The life time value may be configured to be 2.5 to 4.5 times of the sending period of the CCM. When the sink end MEP receives a CCM every time, it starts to activate a timer to monitor whether the corresponding life time carrying in the message is timeout or not. If the sink end MEP receives a next CCM before the timeout, the monitoring is performed again. If the sink end MEP has not received the next CCM when the life time is timeout, an alert is made. After the failure is eliminated and the sink end MEP receives the CCM sent by the source end MEP in the same maintenance entity group again, the alert is eliminated.

Every MP needs to check whether the MEG ID in the CCM matches its own configuration and the sink end MEP needs to ensure that the MEG ID in the received CCM doesn't match its own MEP ID.

Step 3. Deactivate the continuity check

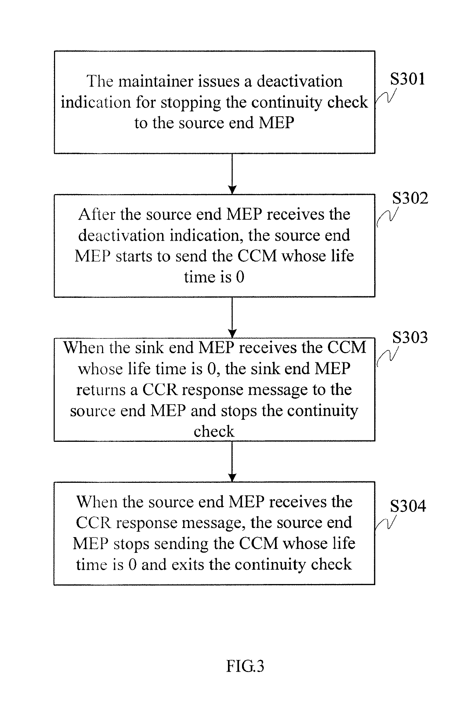

As shown in Figure 3, the detailed flow includes the following steps:

S301. The maintainer issues a deactivation indication for stopping the continuity check to the source end MEP.

S302. After the source end MEP receives the deactivation indication for stopping the continuity check, the source end MEP starts to send the CCM carrying exit check information to the sink end MEP. The CCM may be sent periodically or at an unfixed cycle. The method to configure the exit check information is to configure the life time of the message to be 0 in the present embodiment.

S303. When the sink end MEP receives the CCM whose life time is 0, the sink end MEP returns a CCR message to the source end MEP and stops the continuity check;

When the sink end MEP receives the CCM whose life time is 0, the sink end MEP needs to execute the following operations:

discarding the detect message whose life time is 0, returning a CCR message to the source end MEP and stopping monitoring the timer whose life time is timeout or not.

S304. When the source end MEP receives the CCR message, the source end MEP stops sending the CCM whose life time is 0 and exits the continuity check. Until now, the deactivation of the continuity check is successful.

The CCR message is a message newly defined in an embodiment of the present invention and is described in detail as follows.

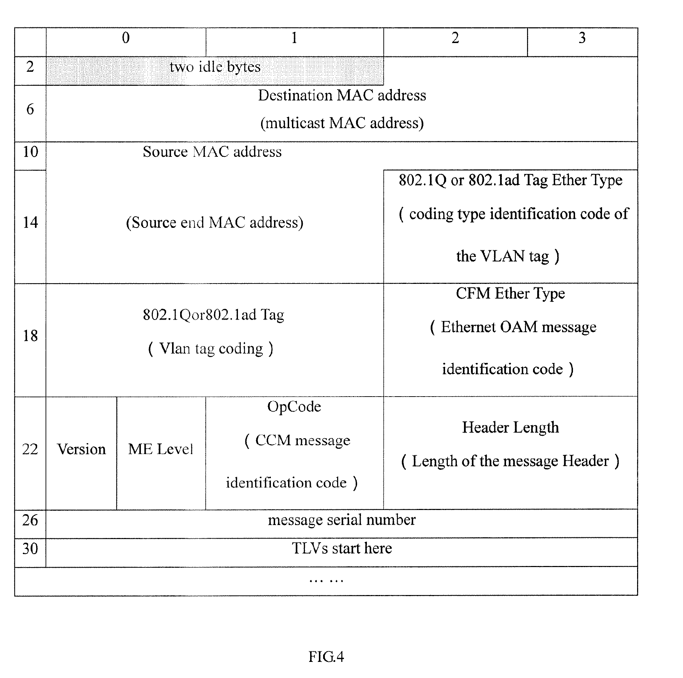

Figure 4 is the schematic diagram of the Common Message Format (CMF) of the existing CCM. The first row illustrates the number of occupied bytes. The first column illustrates the number of total bytes. The header of the message occupies the bytes from the zero byte to the twenty-second byte. The header of the message occupies twenty-three bytes. The zero byte and the first byte are idle. The Destination MAC address and the Source MAC address occupy six bytes respectively beginning from the second byte. The destination MAC address of the CCM is a multicast MAC address specially defined. The source MAC address is MAC address of the source end MEP. The thirteenth, fourteenth, fifteenth and sixteenth bytes illustrated in the figure are the situation of the Vlan Tag defined by packaging one layer 802.1Q or 802. 1ad. The thirteenth byte and the fourteenth byte carry a coding type identification code of the VLAN Tag. The fifteenth byte and the sixteen byte carry the coding of the VLAN Tag. The packages of other protocol formats are also allowed. However, the location of related field needs to be calculated by itself. The seventeenth byte and the eighteenth byte are adapted to carry the identification code which may identifies that the message is the Ethernet OAM check message. The coding carried by an Opcode field which occupies the twentieth byte is adapted to identify the specific type of the OAM check message. The existing OAM checking message includes the CCM, the Loop back message and so on. These messages are respectively defined with different identification codes.

The field of message data is from the twenty-third byte. The message carries the information including a message serial number in the field of message data, the MEG ID of the maintenance entity group, the MEP ID of the source end MEP and the life time. When the source end receives the deactivation indication, the life time TLV in the sent CCM is configured to be 0.

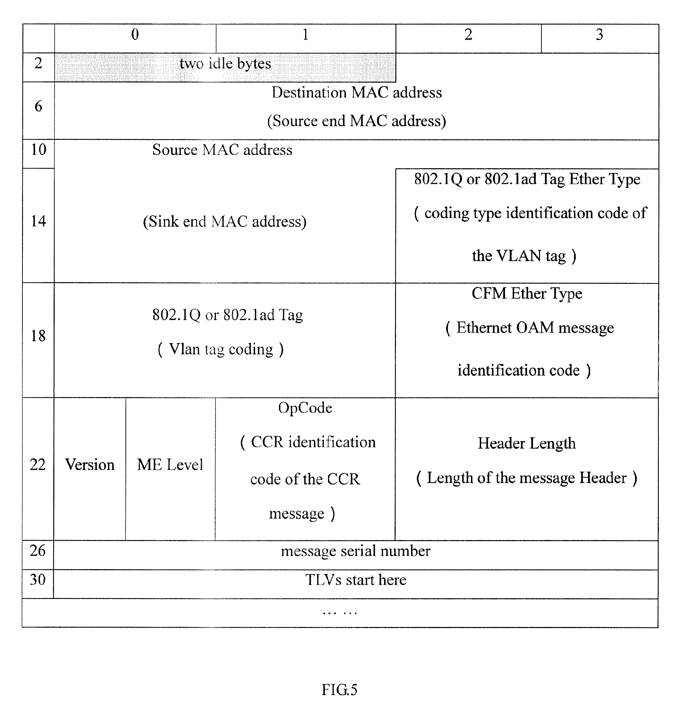

The CCR message in the embodiments of the present invention is shown in Figure 5. Identification information may be defined in the field of OPCode. For example, corresponding to the configured type coding of the CCR message in the embodiments of the present invention, the CCR message is a unicast message. The destination address of the message is the MAC address of the source end MEP. The source address is the MAC address of the sink end address. Other formats are the same as the CCM whose life time TLV is configured to be 0.

When the sink end MEP receives the CCM whose life time TLV is configured to be 0, the sink end MEP stops the continuity check and sends the CCR message as shown in Figure 5 to the source end MEP. When the source end MEP determines that the coding carried in the Opcode field in the received message corresponds to the type coding of the CCR message, the source end MEP stops sending the CCM whose life time TLV is configured to be 0 and stops the continuity check. Until now, the deactivation of the continuity check is completed.

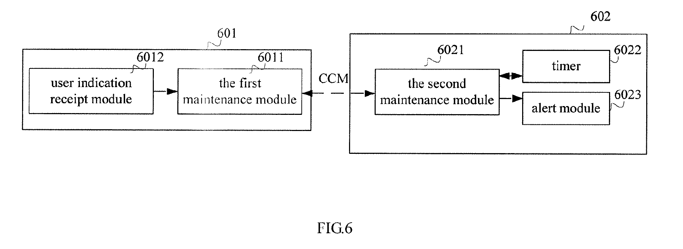

As shown in Figure 6, embodiments of the present invention also provide a system to control the continuity check for the Ethernet links. The system includes a first MP 601 and a second MP 602 which are respectively located at the two ends of the Ethernet link. In the present embodiment, the first MP 601 is a source end MP; the second MP 602 is a sink end MP.

The first MP 601 includes a first maintenance module 6011 and a user indication receipt module 6012.

The second MP 602 includes a second maintenance module 6021.

The user indication receipt module 6012 sends a corresponding trigger signal to the first maintenance module 6011 after receiving the deactivation indication for stopping the continuity check. The first maintenance module 6011 starts to periodically send the CCM carrying the exit check information.

The second maintenance module 6021 returns an exit response message to the first maintenance module 6011 and stops the continuity check when the second maintenance module 6021 has received the CCM carrying exit check information,.

When the first maintenance module 6011 has received the exit response message, the first maintenance module 6011 stops sending the CCM carrying exit checking information and exits the continuity check.

The first maintenance module 6011 starts to periodically send the CCM carrying the life time TLV when the first maintenance module 6011 has received the activation indication for executing the continuity check via the user indication receipt module 6012. The life time is longer than the sending period of a check message.

Furthermore, the second MP 602 also includes a timer 6022 and an alert module 6023.

The second maintenance module 6021 starts to activate the timer 6022 to monitor the life time carried in a CCM when the second maintenance module 6021 receives the CCM every time. If the timer is timeout and the second maintenance module 6021 still doesn't receive a next CCM, the second maintenance module 6021 triggers the alert module 6023 to perform a continuity check loss alert. When the second maintenance module 6021 receives the CCM again, the second module 6021 triggers the alert module 6023 to end the alert.

In a word, the technical solution in the embodiments of the present invention introduces a response mechanism of the deactivation indication in the deactivation steps of the mechanism of the continuity check. In the response mechanism, the source end MEP starts to send the exit continuity check message when it receives the deactivation indication. And the source end MEP doesn't stop sending the exit continuity check message until it receives the response message from the sink end MEP. Therefore, even if the deactivation indication is sent when the link fails, it may be ensured that the sink end MEP may receive the indication for exiting the check sent from the source end MEP after the failure is eliminated. The continuity check failure alert may be stopped timely. The wrong alert of continuity check failure caused by network failure is eliminated. The accuracy of the alert is increased. The technical solution of the present invention may be realized easily and compatible with the

### prior art.

Though illustration and description of the present disclosure have been given with reference to embodiments thereof, it should be appreciated by persons of ordinary skill in the art that various changed in forms and details may be made without deviation from the spirit and scope of this disclosure, which is determined by the appended claims.

## Claims

1. A method for controlling the continuity check of an Ethernet link, comprising:
starting to send a continuity check message carrying exit check information to a sink end maintenance point of the link when a source end maintenance point of the link receives a deactivation indication of the continuity check;
returning an exit response message to the source end maintenance point and stopping the continuity check, when the sink end maintenance point receives the continuity check message carrying the exit check information; and
stopping sending the continuity check message carrying the exit check information and exiting the continuity check when the source end maintenance point receives the exit response message.

2. The method according to claim 1, wherein the starting to send a continuity check message carrying exit check information to a sink end maintenance point of the link comprises one of the following steps:
sending, by the source end maintenance point, the continuity check message carrying the exit check information periodically in a fixed time interval;
sending, by the source end maintenance point, the continuity check message carrying the exit check information intermittently in a preset time interval sequence; and
sending, by the source end maintenance point, the continuity check message carrying the exit check information intermittently in a time interval generated randomly.

3. The method according to claim 1, further comprising:
sending a continuity check message carrying a life time to the sink end maintain point periodically when the source end maintain point receives an activation indication of the continuity check, wherein the life time is longer than the sending period of the continuity check message;
starting to monitor the life time carried in a continuity check message every time when the sink end maintenance point receives the continuity check message, performing a continuity check loss alert if the sink end maintenance point does not receive a next continuity check message when the life time expires, and stopping the continuity check loss alert when a continuity check message is received again.

4. The method according to claim 3, wherein the life time is 2.5 to 4.5 times of the sending period of the continuity check message.

5. The method according to claim 1, wherein the exit check information is indicated by configuring the life time to be 0.

6. The method according to claim 1, wherein the exit response message is a continuity check message carrying configured identification information.

7. The method according to claim 6, wherein the configured identification information is a message type coding configured for corresponding to the exit response message.

8. The method according to claim 6, wherein the identification information is carried in an OpCode field of the continuity check message.

9. The method according to claim 6, wherein the exit response message is a unicast message whose destination address is a Media Access Control (MAC) address of the source end maintenance point and whose sender address is a MAC address of the sink end maintenance point.

10. A system for controlling the continuity check of the Ethernet link, comprising a first maintenance point and a second maintain point respectively located at two ends of an Ethernet link, wherein:
the first maintenance point comprises:
a user indication receipt module adapted to output a corresponding trigger signal after receiving a deactivation indication for stopping the continuity check; and
a first maintenance module adapted to start to send a continuity check message carrying exit check information according to the trigger signal;
the second maintenance point comprises:
a second maintenance module adapted to return an exit response message to the first maintenance point and stop the continuity check after receiving the continuity check message carrying the exit check information; and
the first maintenance module stops sending the continuity check message carrying the exit check information when the first maintenance module receives the exit response message and exits the continuity check.

11. The system according to claim 10, wherein the second maintenance point further comprises a timer and an alert module;
the first maintenance module starts to periodically send the continuity check message carrying a life time which is longer than the sending period of the continuity check message when the first maintenance module receives the activation indication for executing the continuity check via the user indication receipt module; and
the second maintenance module starts activating the timer to monitor the life time carried in a continuity check message when the second maintenance module receives the continuity check message every time; if the second maintenance module doesn't receive a next continuity check message when the timer expires, the second maintenance module triggers the alert module to perform the continuity check loss alert; the second maintenance module triggers the alert module to end the alert when the second maintenance module receives the continuity check message again.

12. A maintenance point, comprising a user indication receipt module adapted to output a corresponding trigger signal when the maintenance point receives a deactivation indication for stopping a continuity check, wherein the maintenance point further comprises:
a first maintenance module adapted to start to send a continuity check message carrying exit check information according to the trigger signal, stop sending the continuity check message carrying exit check information and exit the continuity check according to a received exit response message.

13. A maintenance point, comprising a timer and an alert module, wherein the maintenance point further comprises:
a second maintenance module adapted to send an exit response message after receiving a continuity check message carrying exit check information; or adapted to
activate a timer to monitor a life time carried in a continuity check message according to the continuity check message carrying the life time; trigger the alert module to perform a continuity check loss alert if the second maintenance module does not receive a next continuity check message when the timer expires; and trigger the alert module to end the alert when the second maintenance module receives the continuity check message carrying the life time again.
